# EUROPÄISCHE PATENTANMELDUNG

(11) **EP 2 363 318 A2**
(43) Veröffentlichungstag der Anmeldung: **07.09.2011**
(21) Anmeldenummer: 11003557.3
(22) Anmeldetag: 07.04.2004
(51) Int. Cl.: B60N 2/56, B60H 1/00

(54) **Fahrzeugsitz**

(30) Priorität: 08.04.2003 DE 10316275
(62) Teilanmeldung aus: 04726129.2
(71) Anmelder: Johnson Controls GmbH, 51399 Burscheid (DE)
(72) Erfinder: Hartwich, Dirk, 42399 Wuppertal (DE)
(74) Vertreter: Wolff, Felix

(57) **Zusammenfassung**

Es wird ein Fahrzeugsitz und ein Verfahren vorgeschlagen, wobei der Fahrzeugsitz wenigstens einen Ventilator, wenigstens eine Nutzfläche und wenigstens eine Luftversorgungsöffnung aufweist, wobei der Ventilator vorgesehen ist, in einem zwischen der Nutzfläche und der Luftversorgungsöffnung befindlichen Luftkanal eine gerichtete Luftströmung herzustellen und wobei der Ventilator bei in Fahrtrichtung des Fahrzeugs ausgerichtetem Fahrzeugsitz an der Seite des Fahrzeugsitzes angeordnet vorgesehen ist.

## Beschreibung

Die Erfindung betrifft einen Fahrzeugsitz nach dem Oberbegriff der nebengeordneten Ansprüche. Insbesondere Kraftfahrzeuge werden zunehmend mit Komfortfunktionen ausgerüstet, damit deren Benutzung, beispielsweise bei hohen Außentemperaturen und/oder großer Sonneneinstrahlung, erleichtert wird.

Allgemein bekannt ist die Verwendung von sogenannten Klimasitzen in Kraftfahrzeugen, die derart vorgesehen sind, dass Nutzungsflächen, d.h. in der Regel solche Flächen, die ein Benutzer beispielsweise durch Aufsetzen bzw. Anlehnen berührt, in ihrer Oberflächentemperatur wählbar vorgesehen sind und insbesondere eine Abkühlung bzw. Erwärmung der Nutzungsflächen erlauben. Hierbei wird eine Abkühlung der Nutzflächen dadurch bewerkstelligt, dass ein Luftstrom in einem Luftkanal im Fahrzeugsitz eingerichtet wird, der dafür sorgt, dass Wärme von der Oberfläche der Nutzflächen abgeführt wird.

Beispielsweise aus der deutschen Gebrauchsmusterschrift DE 200 02 540 U1 ist ein Sitzpolsterteil für Fahrzeugsitze bekannt, das mit einem Formteil aus einem luftdurchlässigen Material und einer auf einer Rückseite des Formteils angeordneten Belüftungseinrichtung vorgesehen ist und in der oben angegebenen Weise zur Kühlung der Oberfläche des Sitzpolsterteils vorgesehen ist. Ein solcher Fahrzeugsitz weist jedoch aufgrund der Anordnung der Belüftungseinrichtung auf der Rückseite des Sitzes eine großen Bauraum auf, was sich Nachteilig auf seine Verwendbarkeit in Fahrzeugen - insbesondere unter Kostengesichtspunkten - auswirkt.

Der Erfindung liegt daher die Aufgabe zugrunde einen temperatureinstellbaren Fahrzeugsitz zu schaffen, der einen sehr kleinen Bauraum bzw. eine sehr kleine Bautiefe - insbesondere hinsichtlich der Dicke seiner Lehne und hinsichtlich der Bauhöhe seines Sitzunterbaus - aufweist. Weiterhin soll bei in der Regel vorhandener Klimaanlage im Fahrzeug die klimatisierte Luft auf möglichst direktem Weg vom Fahrzeuginneren zur Abkühlung Sitzflächen des Klimasitzes transportiert werden. Eine weitere Aufgabe besteht darin, die die Nutzflächen abkühlende Luft möglichst ohne eine zusätzliche Luftverteilschicht an die gesamte zu kühlende Oberfläche zu bringen, was weiter die Bautiefe des Sitzes verringert. Weiterhin soll der Klimasitz derart betrieben werden, dass einerseits eine schnelle Abkühlung möglich ist, andererseits jedoch im "Normalbetrieb" eines auf "Komforttemperatur" befindlichen Fahrzeuginnenraums keine zu große Kühlleistung möglich ist, so dass eine für einen Benutzer möglicherweise schädliche Unterkühlung weitgehend vermieden wird.

Diese Aufgaben werden erfindungsgemäß durch einen Fahrzeugsitz gemäß den nebengeordneten Ansprüchen gelöst. Hierzu ist zum einen ein Fahrzeugsitz mit einem Ventilator, einer Nutzfläche und einer Luftversorgungsöffnung vorgesehen, bei dem der Ventilator in einem zwischen der Nutzfläche und der Luftverteilöffnung befindlichen und sich in wenigstens zwei Luftkanalarme teilenden Luftkanal eine gerichtete Luftströmung herstellt, wobei der Ventilator bei in Fahrtrichtung des Fahrzeugs ausgerichtetem Fahrzeugsitz an der Seite des Fahrzeugsitzes angeordnet vorgesehen ist. Weiterhin ist ein Fahrzeugsitz mit einer Nutzfläche und einer Luftversorgungsöffnung vorgesehen, wobei die Nutzfläche mit der Luftversorgungsöffnung über wenigstens einen Luftkanal verbunden ist, wobei in dem Luftkanal eine gerichtete Luftströmung vorgesehen ist, wobei in einer Richtung ausgehend von der Luftversorgungsöffnung hin zur Nutzfläche eine Verkleinerung des Querschnitts des Luftkanals vorgesehen ist.

Ein weiterer Gegenstand der vorliegenden Erfindung ist ein Verfahren zur Steuerung der Stärke der Wärmetransportleistung einer Luftströmung in einem Luftkanal eines Fahrzeugsitzes, der in einem Fahrzeug eingesetzt wird, wobei die Wärmetransportleistung der Luftströmung in Abhängigkeit davon vorgesehen ist, ob eine gemessene Fahrzeugisttemperatur im Inneren des Fahrzeugs oberhalb einer vorgegebenen Fahrzeugsolltemperatur liegt. Hierdurch kann die Klimaleistung des Sitzes vorteilhafterweise über die Fahrzeuginnentemperatur gesteuert werden. Bevorzugt ist eine Ausführungsform vorgesehen, bei der die Stärke der Luftströmung als Maß für die Stärke der Wärmetransportleistung der Luftströmung verwendet wird. Dies ist vorteilhaft, weil die Stärke der Luftströmung eine besonders einfach zugängliche Größe mit - zusammen mit der maßgebenden Temperaturdifferenz - Einfluss auf die Wärmetransportleistung ist. Bevorzugt ist weiterhin eine Ausführungsform des Verfahrens, bei der zwei unterschiedlich starke Luftströmungen möglich sind, wobei die stärkere Luftströmung lediglich für den Fall einer deutlichen Überschreitung der Fahrzeugsolltemperatur durch die Fahrzeugisttemperatur eingestellt wird und wobei für den Fall, dass die Fahrzeugisttemperatur im Bereich der Fahrzeugsolltemperatur liegt, nur Luftströmungsstärken eingestellt werden können, die im Bereich der schwächeren der zwei unterschiedlich starken Luftströmungen liegen. Dadurch werden vorteilhafterweise gesundheitsbeeinträchtigende Unterkühlungen von Benutzern des Fahrzeugssitzes vermieden.

Die Erfindung wird nachfolgend anhand von in der Zeichnung dargestellten Ausführungsbeispielen näher erläutert. Es zeigen
- Figuren 1 und 1 a: einen erfindungsgemäßen Fahrzeugsitz in einer perspektivischen Darstellung mit Detailvergrößerungen,
- Figur 2: zwei Detailansichten einer Luftversorgungsöffnung des Klimasitzes,
- Figuren 3 und 3a: zwei Schnittdarstellungen zur Veranschaulichung zweier alternativer Aufbauvarianten des Klimasitzes zwischen dem Luftkanal und der Nutzfläche,
- Figuren 4, 4a, 4b: Schnittdarstellungen eines Teils eines Luftkanals in zwei alternativen Ausführungsformen des Luftkanals und eine Draufsicht auf die zweite Ausführungsform des Luftkanals im Zustand "besetzt",
- Figur 5: ein Beispiel für eine Bedieneinheit zur Regelung des Klimasitzes,
- Figuren 6, 7 und 8: ein Temperaturdiagramm, ein Diagramm der Lüfterdrehzahl und ein Wärmestromdiagramm,
- Figur 9: die Rückenlehne eines erfindungsgemäßen Fahrzeugsitzes,
- Figur 10: einen erfindungsgemäßen Fahrzeugsitz mit verschiedenen Möglichkeiten einbaubarer Ventilatoren,
- Figuren 11 und 12: zwei Schnittdarstellungen zur Veranschaulichung von Kompensationselementen, die einer Verringerung des Querschnitts des Luftkanals bei Belastung der Nutzfläche des Klimasitzes entgegenwirken und
- Figur 13: eine schematische Darstellung eines Fahrzeuginnenraums mit zwei erfindungsgemäßen Klimasitzen zur Veranschaulichung von Luftbewegungen.

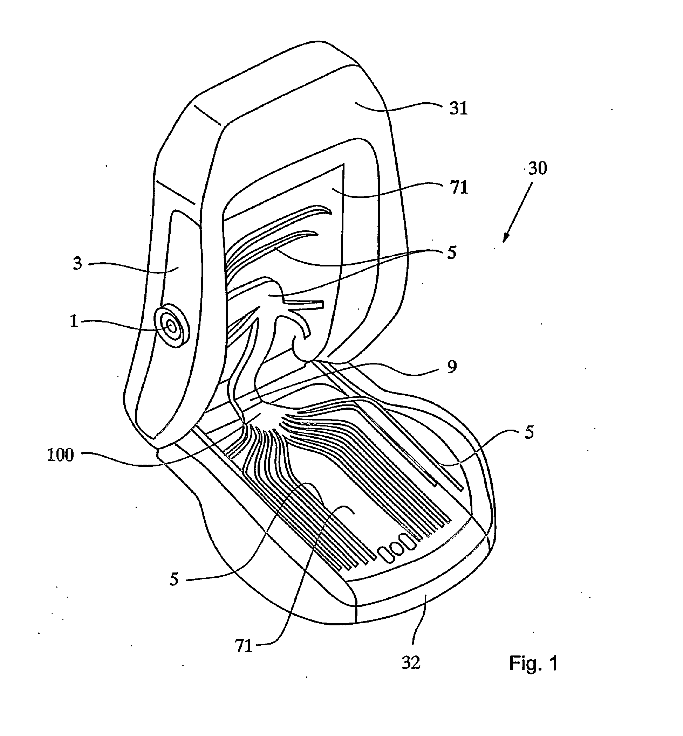

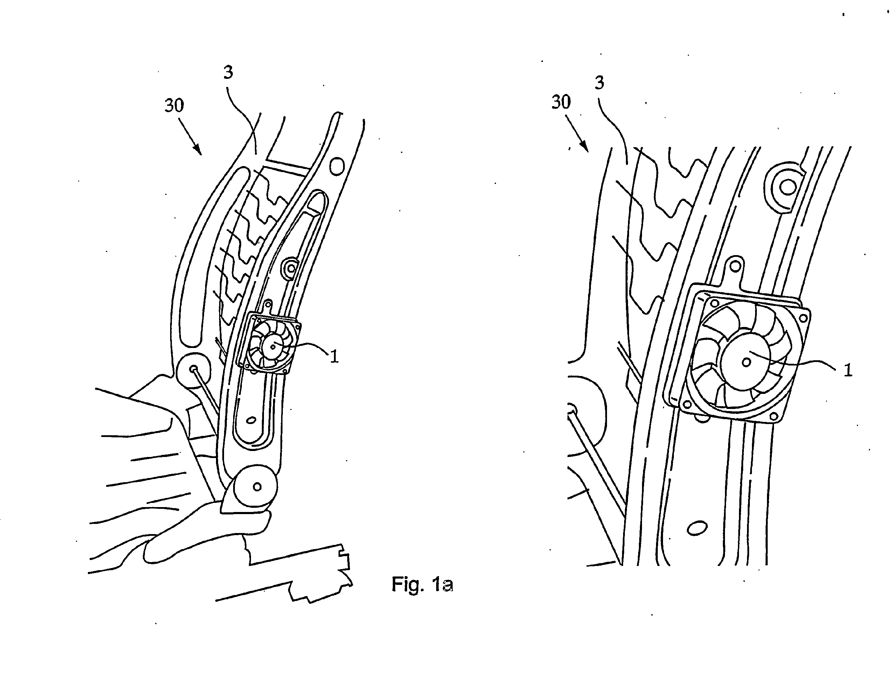

In Figur 1 ist ein erfindungsgemäßer Fahrzeugsitz 30 in einer perspektivischen Darstellung dargestellt. Der Fahrzeugsitz 30 oder kurz Sitz 30 ist erfindungsgemäß als Klimasitz 30 vorgesehen und umfasst beispielhaft eine Lehne 31 und ein Sitzteil 32. Die Lehne 31 weist beispielhaft eine Lehnenstruktur 3 und eine nicht mit einem Bezugszeichen bezeichnete Polsterung auf. Ebenso weist das Sitzteil 32 eine nicht mit einem Bezugszeichen bezeichnete Sitzteilstruktur und eine ebenfalls nicht mit einem Bezugszeichen bezeichnete Polsterung auf. Der Sitz 30 weist ferner einen Ventilator 1 auf, der im folgenden auch als Lüfter 1 bezeichnet wird. Erfindungsgemäß ist der Lüfter 1 seitlich an der Lehnenstruktur 3 oder der Sitzteilstruktur angebracht. Alternativ kann der Lüfter 1 auch an der Polsterung der Lehne 31 oder des Sitzteils 32 befestigt sein. Vom Lüfter 1 aus führt ein Luftkanal 5 zu verschiedenen Stellen der Nutzfläche 71, wobei ein Teil der Nutzfläche 71 an der Lehne vorgesehen ist und ein Teil der Nutzfläche 71 am Sitzteil. Im Beispiel der Figur 1 ist ein einziger Lüfter lediglich an der Lehne 31 vorgesehen, wobei zur Versorgung der Nutzfläche 71 des Sitzteils 32 ein flexibles Verbindungselement 9 vorgesehen, welches einen Teil des Luftkanals 5 ausmacht und an das sich unmittelbar ein Verteilungsabschnitt 100 des Luftkanals 5 anschließt. In Figur 1a sind zwei Detailvergrößerungen des Sitzes 30 dargestellt, bei denen die Polsterung der Lehne 31 und des Sitzteils 32 nicht montiert ist, weshalb die Lehnenstruktur 3 und die seitliche Anbringung des Lüfters 1 an der Lehnenstruktur 3 besser sichtbar ist.

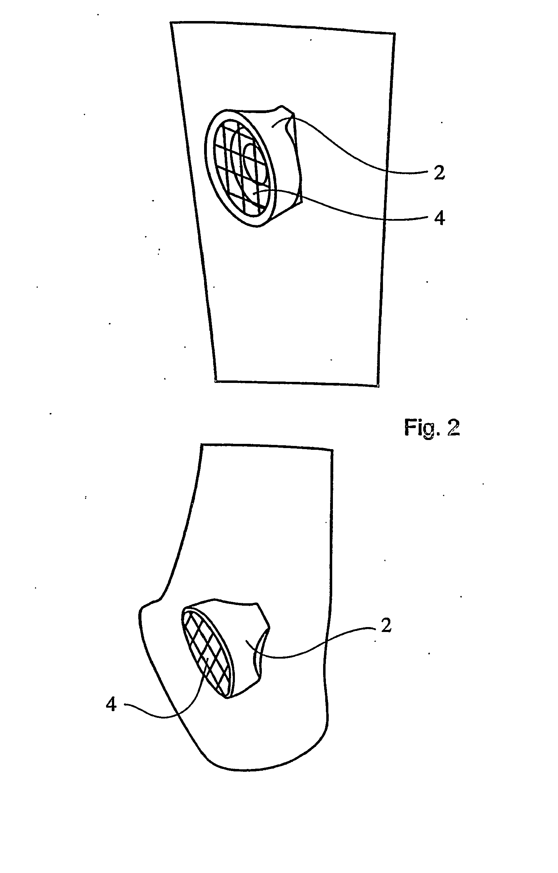

In Figur 2 sind zwei Detailansichten einer Luftversorgungsöffnung des Klimasitzes 30 dargestellt. Die Luftversorgungsöffnung umfasst ein Gitter 4 und einen Trichter 2. Die Luftversorgungsöffnung 2, 4 ist mit dem Lüfter 1 verbunden und im Beispiel seitlich an der in Figur 2 nicht dargestellten Lehnenstruktur 3 befestigt. Der Trichter 2 ist lufttechnisch optimiert vorgesehen. Im Beispiel ist der Lüfter als blasender Lüfter 1 vorgesehen, wobei der Lüfter 1 Luft durch die Luftversorgungsöffnung 2, 4 ansaugt und in den Luftkanal 5 einbläst. Das Gitter 4 kann alternativ auch als luftdurchlässiges Gewebe vorgesehen sein oder es kann zusätzlich zu dem Gitter 4 ein luftdurchlässiges Gewebe - insbesondere zur "Vorfilterung" der in den Luftkanal 5 eingeblasenen Luft - an der Luftversorgungsöffnung 2, 4 vorgesehen sein. Selbstverständlich ist es auch möglich, anstelle eines blasenden Lüfters einen saugenden Lüfter zu verwenden; es würde sich lediglich die Betriebsrichtung des Lüfters drehen.

Im dargestellten Ausführungsbeispiel ist lediglich ein Lüfter 1 bzw. ein Lüftermodul seitlich an der Lehnenstruktur 3 oder auch an der Lehnenpolsterung befestigt. Diese seitliche Anordnung - ähnlich einem Airbagmodul - ermöglicht es, einen Klimasitz 30 mit einer sehr geringen Bautiefe - d.h. der Bautiefe der Lehne 31 bzw. des Sitzteils 32 - zu realisieren. Der Lüfter 1 kann erfindungsgemäß auch seitlich an der Sitzteilstruktur positioniert sein. Die Luft strömt in beiden Fällen im Luftkanal 5 annähernd parallel zur Nutzfläche 71, d.h. beispielsweise zur Sitzfläche für das Sitzteil 32, in den Sitz 30 ein und vermindert so Strömungsverluste, so dass die Verwendung eines - im Vergleich zu einer im wesentlichen senkrechten Einströmrichtung relativ zur jeweiligen Nutzfläche 71 - kleineren Lüfters 1 bzw. die Verwendung einer geringeren Anzahl von Lüftern 1 möglich wird. Durch diese Art der Anströmung wird auch das akustische Problem verringert bzw. gelöst, das durch die unterschiedliche Belastung des Sitzes 30 zwischen dem Zustand "besetzt" und dem Zustand "unbesetzt" des Sitzes 30 entsteht. Es ist nämlich so, dass bei einer weitgehend senkrechten Anströmung der jeweiligen Nutzfläche 71, d.h. der Luftstrom wird vom Lüfter 1 direkt zur Nutzfläche 71, d.h. beispielsweise der Sitzfläche, geführt, starke Schwankungen des Luftwiderstandes im Luftkanal zwischen unbesetztem und besetztem Sitz 30 entstehen, die zu unangenehmen und störenden Geräuschen führen.

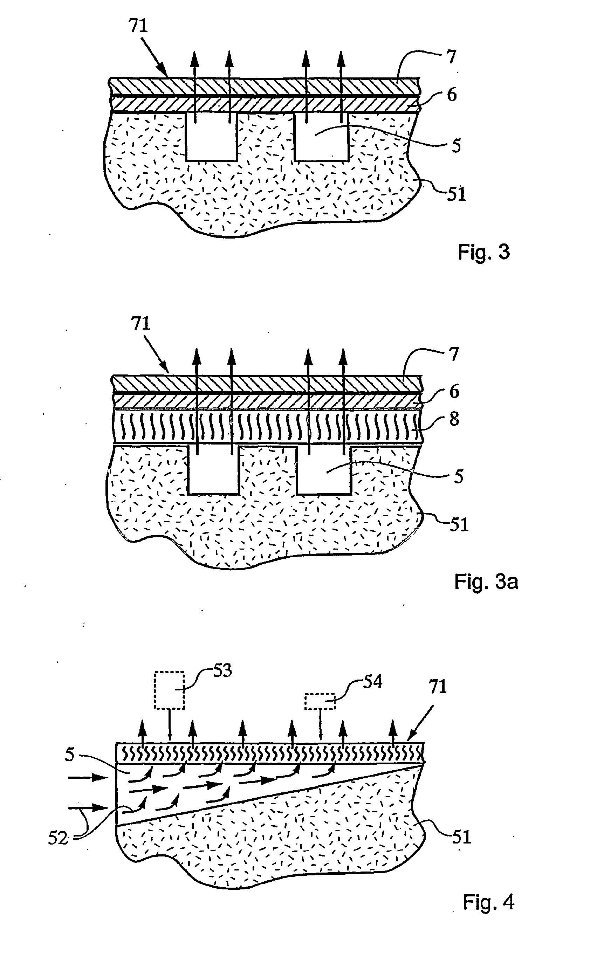

In den Figuren 3 und 3a sind zwei Schnittdarstellungen zur Veranschaulichung zweier alternativer Aufbauvarianten des Klimasitzes 30 zwischen dem Luftkanal 5 und der Nutzfläche 71 dargestellt. Der Luftkanal 5 teilt sich erfindungsgemäß ausgehend von der Luftversorgungsöffnung 2, 4 in mehrere Luftkanalarme auf. In den Figuren 3 und 3a sind jeweils zwei solcher Luftkanalarme als Abschnitte des Luftkanals 5 im Querschnitt dargestellt. Die Form des Luftkanals 5 und seiner Luftkanalarme wird erfindungsgemäß beispielsweise dadurch erreicht, dass einem Schaumstoffmaterial 51 eine entsprechende Form derart gegeben wird, dass sich der Luftkanal 5 dann bildet, wenn das Schaumstoffmaterial 51 durch weitere Materialschichten abgedeckt wird. In einer ersten Aufbauvariante des Sitzes 30 gemäß Figur 3 ist oberhalb des Luftkanals 5, d.h. oberhalb des Schaumstoffmaterials 51 eine luftdurchlässige und perforierte Schicht 6 vorgesehen, in der beispielsweise die Sitzheizung 6 des Sitzes 30 untergebracht ist. Oberhalb der Sitzheizung 6 ist ein luftdurchlässiges Obermaterial 7 bzw. eine Oberware 7 des Sitzes 30 vorgesehen. Mit diesem Aufbau des Sitzes 30 ist eine sehr gute Klimaleistung möglich. In einer zweiten Aufbauvariante des Sitzes 30 gemäß Figur 3a ist im Unterschied zur ersten Aufbauvariante zwischen dem Luftkanal 5 und der Sitzheizung 6 noch eine Luftverteilschicht 8, beispielsweise aus Gummihaar oder Abstandsgewirke vorgesehen, die die Feinverteilung der Luft unterstützt. Der Luftkanal 5 ist in seinen Luftkanalarmen sehr feingliedrig bzw. verästelt vorgesehen. Hierdurch werden alle wesentlichen Stellen der Nutzfläche 71 durch Luftkanalarme erreicht. Besonders vorteilhaft ist es erfindungsgemäß vorgesehen, dass feinste Arme des Luftkanals 5 bis in den Seitenbereich der Sitzpolsterung geführt werden und auch hier eine Klimatisierung des Benutzers ermöglichen. Es ist wegen der ersten Aufbauvariante deshalb erfindungsgemäß nicht unbedingt notwendig, oberhalb des Luftkanals 5 eine Luftverteilschicht 8 vorzusehen, wobei dies jedoch durchaus (zweite Aufbauvariante) erfindungsgemäß möglich ist. Das Weglassen der Luftverteilschicht 8 hat weiterhin den Vorteil, die Bautiefe des Sitzes 30 zu verkleinern. Um einen hohen Luftdurchsatz im Sitz 30 zu erreichen, ist es notwendig, über den Luftkanälen Materialien mit einer Fähigkeit zu hohem Luftdurchsatz zu verwenden. Die Anzahl der Schichten sollte daher so gering wie möglich sein. In Fällen, in denen keine Sitzheizung 6 erforderlich ist, ist die die Sitzheizung 6 aufnehmende Schicht 6 mittels eines luftdurchlässigen und perforierten Vlieses oder eines entsprechenden anderen Materials zu realisieren. Die Sitzheizung 6 oder die sie ersetzende Schicht 6 sollte dabei auf die Schaumoberseite des Schaumstoffmaterials 51 geklebt werden, um über den Luftkanälen eine tragende Schicht 6 zu bilden. Dieser "Brückeneffekt" ist notwendig, um ein Einfallen der Oberware 7 in den Luftkanal 5 bzw. seine Luftkanalarme zu vermeiden. Der "Brückeneffekt" kann durch den Einsatz von Gummihaar, insbesondere in einer Luftverteilschicht 8 unterstützt werden.

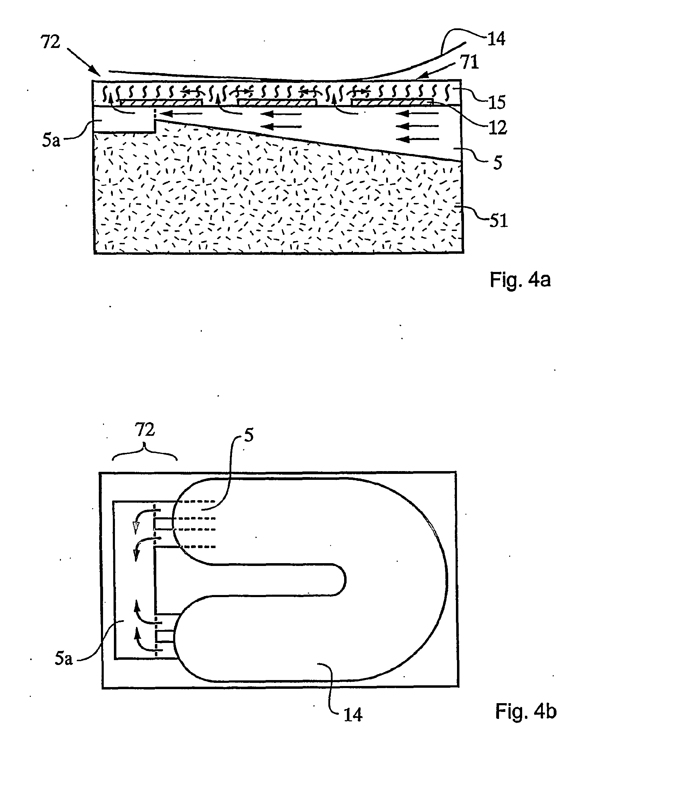

In den Figuren 4, 4a sind Schnittdarstellungen eines Teils eines Luftkanals 5 entlang der Strömungsrichtung der Luft im Luftkanal 5 in zwei alternativen Ausführungsformen des Luftkanals 5 dargestellt. Um den Klimasitz 30 mit ausreichender Kühlleistung und mit lediglich einem einzigen Lüfter 1 zu realisieren, ist es notwendig, den Luftkanal 5 strömungstechnisch zu optimieren. Gemäß einer in Figur 4 dargestellten ersten Ausführungsform des Luftkanals 5 sind die Arme des Luftkanals 5 so ausgebildet, dass sich der Gegendruck in den Armen kontinuierlich erhöht und somit ein Teil der Luft an die Sitzoberfläche 71 strömt. Der Schichtaufbau oberhalb des Luftkanals 5 ist in Figur 4 und 4a lediglich schematisiert und ohne Bezugszeichen der den Luftkanal 5 abdeckenden Schicht dargestellt. Die Erhöhung des Gegendrucks in dem Luftkanal 5 wird erfindungsgemäß insbesondere dadurch erreicht, dass der Querschnitt des Luftkanals 5 in den Luftkanalarmen in einer Richtung ausgehend von der Luftversorgungsöffnung 2, 4 hin zur Nutzfläche 71 - also in in Figur 4 mit Pfeilen 52 der Luftströmung gekennzeichneten Strömungsrichtung der Luft - kontinuierlich verkleinert wird. In Figur 4 sind beispielhaft zwei unterschiedlich große Querschnittsflächen 53, 54 des Luftkanals 5 an unterschiedlichen Stellen des Luftkanals 5 entlang der Strömungsrichtung der Luft dargestellt. Diese Verkleinerung des Querschnitts des Luftkanals 5 wird bei einer in Figur 4 beispielhaft dargestellten rechteckigen Form des Luftkanals 5 in seinen Luftkanalarmen insbesondere dadurch erzielt, dass die Höhe des Luftkanals 5 in Strömungsrichtung der Luft verkleinert wird und die Breite beibehalten wird.

In Figur 4a ist eine zweite Ausführungsform eines Arms des Luftkanals 5 dargestellt. Hierbei ist die Oberseite des Luftkanals 5 in seinen Luftkanalarmen teilweise mit einem Vlies verschlossen und nur in bestimmten Abständen nach oben geöffnet. Die den Luftkanal 5 verschließenden Stellen sind in Figur 4a mit dem Bezugszeichen 12 versehen. Weiterhin ist eine luftdurchlässige Abdeckschicht 15 oder auch Polsterung 15 vorgesehen. Mit dem Bezugszeichen 14 ist diejenige Oberfläche eines Benutzers, beispielsweise seine Gesäßoberfläche, bezeichnet, die die Nutzfläche 71 des Sitzes 30 berührt. Durch die Verkleinerung des Querschnittes des Luftkanals 5 steigt der Druck im Luftkanal 5 an. Wenn der Druckwiderstand der Polsterung 15 kleiner ist als der Druckwiderstand im Luftkanal 5, wird die Luft in Richtung Sitzoberfläche geführt. Durch ein relativ luftundurchlässiges Material wie beispielsweise ein Vlies 12, welches nur partiell eine offene, d.h. luftdurchlässige, Struktur besitzt, kann der Druckaufbau im Luftkanal 5 noch verstärkt werden. Um jedoch den Luftwiderstand im Zustand eines besetzten Sitzes 30 nicht zu stark ansteigen zu lassen, wird mittels eines Druckbegrenzungsabschnitts 5a des Luftkanals und einer im Druckbegrenzungsabschnitt 5a erfolgenden Querschnittsvergrößerung in einem von einem Benutzer 14 in der Regel nicht als Sitzfläche benutzten Bereich 72 der Sitzoberfläche gewährleistet, dass eine genügend große Luftmenge aus der Sitzoberfläche ausströmen kann. Hierzu ist in Figur 4b eine Draufsicht auf die zweite Ausführungsform des Luftkanals 5 im durch einen Benutzer 14 besetzten Zustand dargestellt.

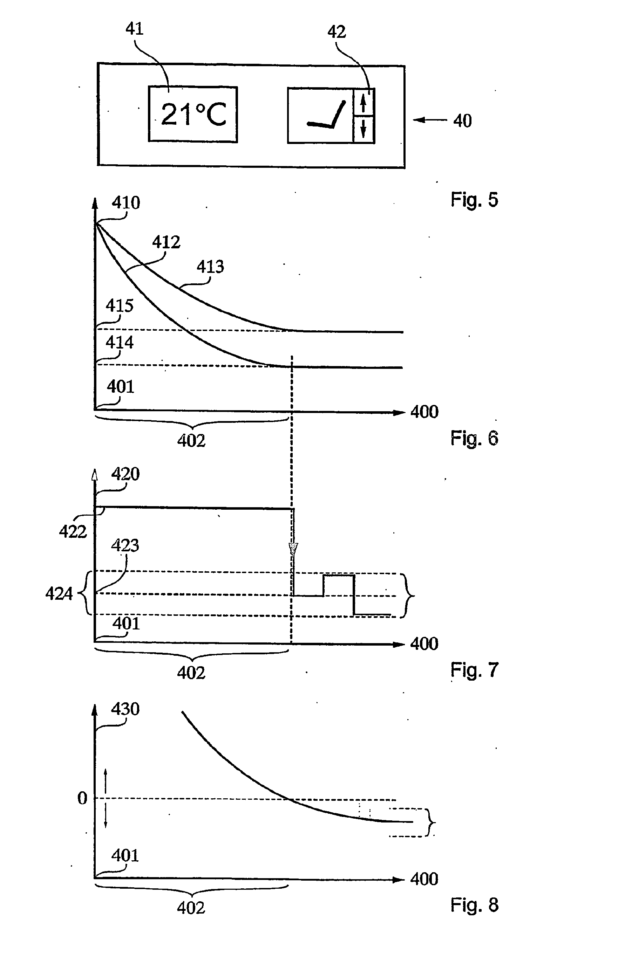

In Figur 5 ist ein Beispiel für eine Bedieneinheit 40 zur Regelung des Klimasitzes 30 dargestellt. Auf der linken Seite ist eine Anzeige 41 der Fahrzeuginnenraumtemperatur dargestellt und auf der rechten Seite ist eine Einstellmöglichkeit 42 für die Temperatur des Sitzes 30 vorgesehen, wobei die Fahrzeuginnenraumtemperatur und Fahrzeugsitztemperatur in der Regel einen bestimmten Temperaturunterschied aufweisen - üblicherweise liegt die Fahrzeuginnentemperatur bei ca. 21 °C und die Fahrzeugsitztemperatur ca. 14 °C darüber - und wobei die Fahrzeugsitztemperatur nach den Wünschen des Benutzers in gewissen Grenzen einstellbar ist.

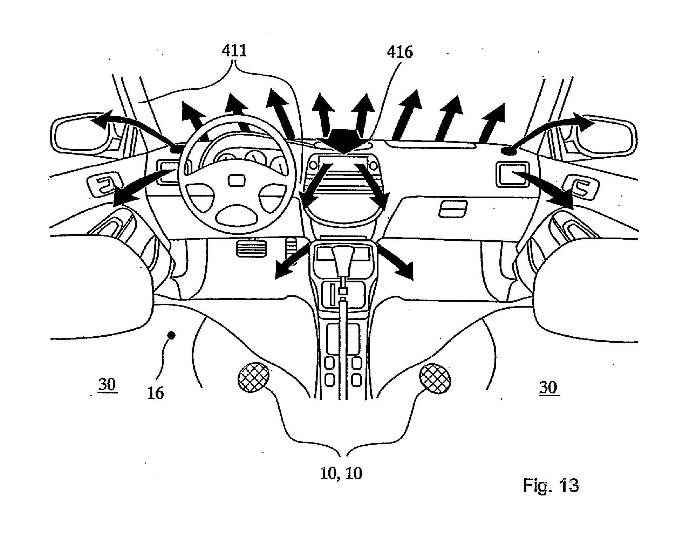

In Figur 6 ist ein Temperaturdiagramm für eine Abkühlkurve eines Fahrzeugs mit einem Klimasitz 30 dargestellt, in Figur 7 ist ein Diagramm der Lüfterdrehzahl und in Figur 8 ein Wärmestromdiagramm dargestellt. Die Diagramme sind in der angegebenen Reihenfolge untereinander angeordnet und stellen zeitliche Verläufe der Temperatur 410, der Lüfterdrehzahl 420 bzw. des Wärmestroms 430 dar. Die mit dem Bezugszeichen 400 bezeichnete Achse ist also eine Zeitachse. Der zeitliche Startpunkt der Diagramme ist jeweils mit dem Bezugszeichen 401 versehen und stellt den Zustand eines beispielsweise durch starke Sonneneinstrahlung überhitzten Fahrzeugs dar. In Figur 6 ist eine Innenraumtemperaturkurve 412 und eine Sitztemperaturkurve 413 dargestellt. Der Innenraum wird beispielsweise durch eine nicht dargestellte Klimaanlage abgekühlt, so dass sich im zeitlichen Verlauf 400 der Figur 6 eine Verringerung der Innenraumtemperatur 412 ergibt. Gleichzeitig ist der erfindungsgemäße Klimasitz 30 und insbesondere dessen Lüfter 1 stark aktiviert, was sich an einer vergleichsweise hohen ersten Lüfterdrehzahl 422 während einer in allen Diagrammen mit dem Bezugszeichen 402 bezeichneten Abkühlphase zeigt. Durch die Wirkung der vergleichsweise großen ersten Lüfterdrehzahl 422 sinkt während der Abkühlphase 402 die Wärmetransportleistung 430 bzw. der Wärmestrom 430 vom Sitz 30 zum Benutzer des Sitzes 30 stark, bis sie am Ende der Abkühlphase 402 etwa auf null gesunken ist, d.h. es findet keine Erwärmung mehr des Benutzers durch den Sitz 30 statt. Beim Erreichen eines Komforttemperaturbereichs um eine Innenraumkomforttemperatur 414 für den Innenraum herum bzw. um eine Sitzkomforttemperatur 415 für den Sitz 30 herum, was ebenfalls etwa am Ende der Abkühlphase 402 der Fall ist, wird die Lüfterleistung bzw. die Lüfterdrehzahl 420 von ihrem ersten Wert 422 auf eine zweite Lüfterdrehzahl 423 verringert. In der Folge des zeitlichen Verlaufs 400 kann die Lüfterdrehzahl 420 nur noch im Bereich 424 der zweiten Lüfterdrehzahl 423 variieren solange nicht die Innenraumkomforttemperatur von der Innenraumtemperatur maßgeblich überschritten wird (beispielsweise durch erneute Sonneneinstrahlung bei abgeschalteter Klimaanlage). Die ausschließliche Variation der Lüfterdrehzahl 420 im Bereich 424 der zweiten Lüfterdrehzahl 423 geschieht, um eine zu starke Abkühlung bzw. Unterkühlung eines Benutzers des Sitzes 30 zu verhindern. Da jeder Mensch ein individuelles Temperaturempfinden besitzt, wird einem Benutzer des Sitzes 30 ermöglicht, die Sitztemperatur in einer vorgegebenen Bandbreite mittels einer Variation der Wärmetransportleistung des Sitzes 30 und damit einer Variation des Wärmestroms 430 zu variieren. Eine Variation der Wärmetransportleistung kann auch aufgrund eines Sensorsignals erfolgen, das von einem in Figur 13 mit dem Bezugszeichen 416 bezeichneten Sonnenlichtsensor herrührt. Diese Variation der Wärmetransportleistung des Sitzes 30 wird erfindungsgemäß insbesondere über eine Variation der Stärke der Luftströmung im Luftkanal 5 des Sitzes 30 bewerkstelligt, was insbesondere über eine Variation der Lüfterdrehzahl im Bereich 424 um die zweite Lüfterdrehzahl 423 herum vorgesehen ist. Daher korrespondiert die erste Lüfterdrehzahl 422 mit einer ersten Stärke der Luftströmung im Luftkanal 5 und es korrespondiert die zweite Lüfterdrehzahl 423 mit einer zweiten Stärke der Luftströmung im Luftkanal 5 des Sitzes 30. Die Fahrzeuginnenraumtemperatur wird im allgemeinen über einen in Figur 13 dargestellten Temperatursensor 411 gesteuert. Der Sensor 411 ist dabei insbesondere in der Fahrzeugmittelkonsole bzw. an der A-oder B-Säule angeordnet. Dieser Sensor 411 ermittelt die aktuelle Fahrzeuginnenraumtemperatur, die sogenannte Fahrzeugisttemperatur, welche mit der gewünschten und über die Bedieneinheit 40 eingestellten Fahrzeuginnenraumtemperatur, die sogenannte Fahrzeugsolltemperatur, verglichen wird. Die nicht dargestellte Klimaanlage des Fahrzeugs wird dann mittels dieser Temperaturwerte gesteuert.

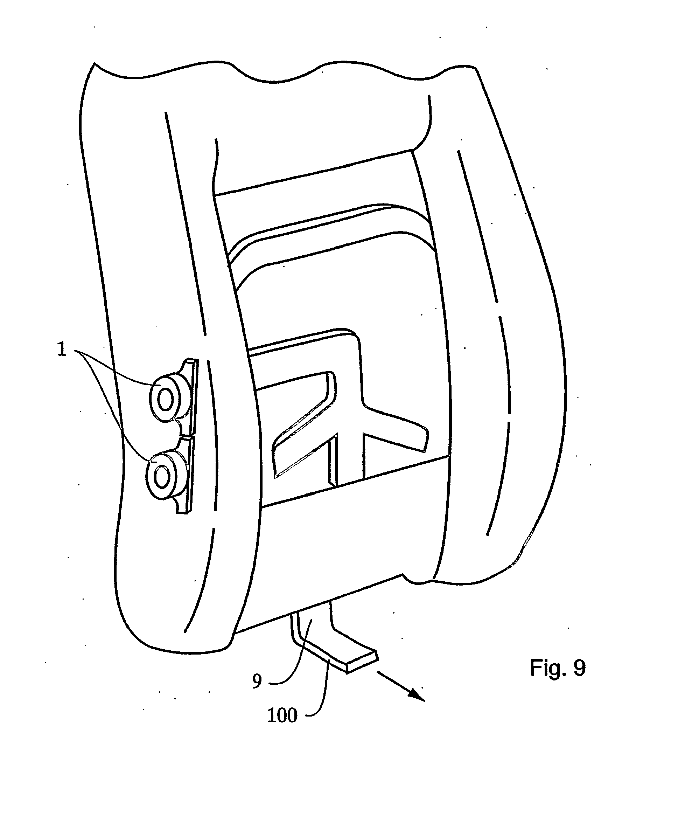

In Figur 9 ist die Rückenlehne 31 eines erfindungsgemäßen Fahrzeugsitzes 30 mit dem Lüfter 1 und dem Verbindungselement 9 bzw. des Verteilungsabschnitts 100 zur Versorgung des in Figur 9 nicht dargestellten Sitzteils dargestellt.

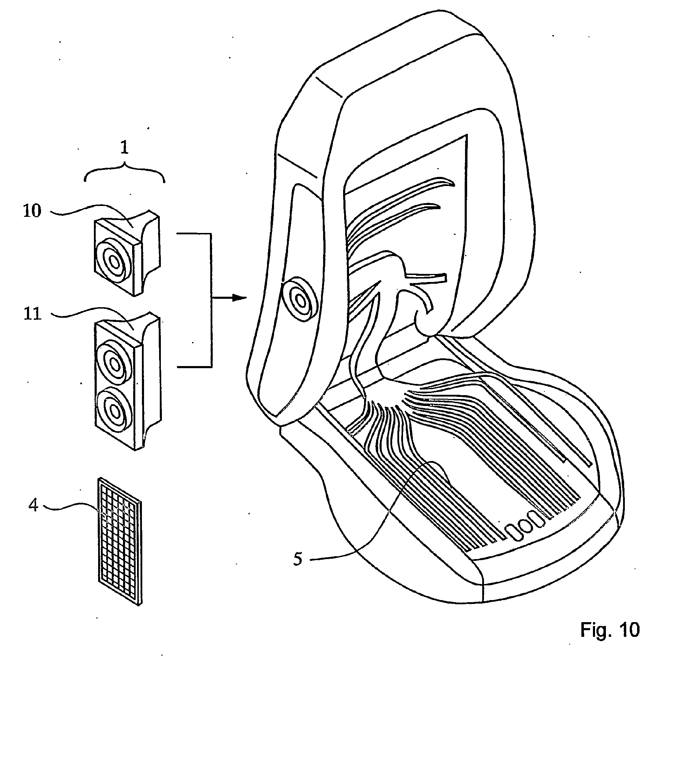

In Figur 10 ist ein erfindungsgemäßer Fahrzeugsitz 30 mit verschiedenen Möglichkeiten einbaubarer Ventilatoren 1 bzw. Lüftermodulen dargestellt. Anstelle eines Lüfters 1 kann in den erfindungsgemäßen Sitz auch ein Lüftermodul 10, 11 eingebaut werden, wobei das Lüftermodul 10, 11 beispielsweise entweder einen Lüfter oder zwei Lüfter umfasst. Die Luftversorgungsöffnung 2, 4 muss dann in der Regel an den jeweiligen Fall angepasst werden. Das Lüftermodul 10, 11 wird erfindungsgemäß in Modulbauweise seitlich an den Sitz 30 angeflanscht und mit einem beispielsweise als Schutzgitter vorgesehenen Gitter 4 abgedeckt. Besonders gut sind in Figur 10 die sich in die Bereiche der Nutzfläche 71 verzweigenden Luftkanalarme des Luftkanals 5 erkennbar.

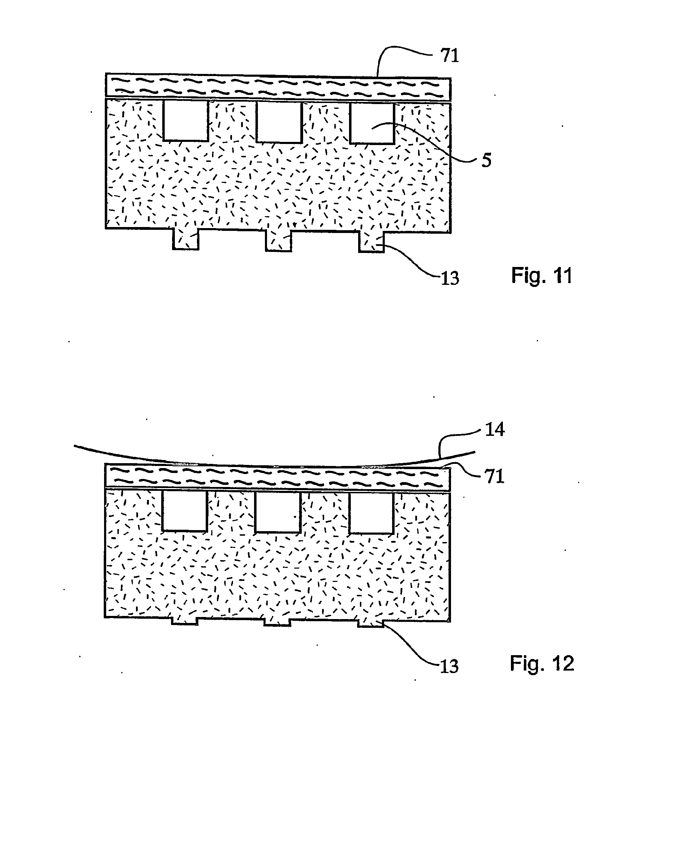

In den Figuren 11 und 12 sind zwei Schnittdarstellungen von Armen des Luftkanals 5 zur Veranschaulichung der Wirkung von Kompensationselementen 13 dargestellt, die einer Verringerung des Querschnitts des Luftkanals 5 bei Belastung der Nutzfläche 71 des Klimasitzes entgegenwirken. Da die Querschnittsverringerung der Luftkanäle 5 im besetzten Zustand durch die Belastung durch einen Benutzer 14 zu einer Erhöhung des Druckverlustes führt, ist eine Verringerung des Querschnitts der Luftkanäle möglichst zu vermeiden. Dadurch, dass auf der Unterseite des Schaumstoffmaterials 51 bzw. des Sitzkissens 51, d.h. auf der der Nutzfläche 71 gegenüberliegenden Seite des Luftkanals 5 die Kompensationselemente 13 als Schaumstege 13 angebracht sind, werden diese Schaumstege 13 im Zustand "besetzt" des Sitzes 30 deformiert und nicht der Luftkanal 5 bzw. die Arme des Luftkanals 5 in der Nähe der Nutzfläche 71. In Figur 11 ist die Situation bei unbesetzter Nutzfläche 71 dargestellt: die Schaumstege 13 sind weitgehend nicht deformiert. In Figur 12 ist die Situation bei besetzter Nutzfläche 71 dargestellt: die Schaumstege 13 sind weitgehend deformiert.

In Figur 13 ist eine schematische Darstellung eines Fahrzeuginnenraums mit zwei erfindungsgemäßen Klimasitzen 30 zur Veranschaulichung von Luftbewegungen dargestellt. Die Lüftermodule 10, 11 sind in Figur 13 seitlich an den Lehnen zweier nebeneinander angeordneter Fahrzeugsitze 30 angeordnet. Vorzugsweise sind die Lüftermodule 10, 11 an der Fahrzeuginnenseite der Sitze 30, d.h. der in den Fahrzeuginnenraum zeigenden Seite der Sitze 30, angeordnet. An den Außenseiten der Fahrzeugsitze sind beispielsweise Airbagmodule vorgesehen, so dass die Anbringung der Lüftermodule 10, 11 auf der Innenseite der Sitze 30 Platzprobleme vermeidet. Bei Sitzen 30, bei denen auf der Außenseite kein Airbagmodul vorgesehen ist, kann auch auf der Außenseite ein Lüfter 1 oder ein Lüftermodul 10, 11 vorgesehen sein. Es ist auch möglich, seitlich, d.h. bevorzugt auf der Sitzinnenseite, einen Lüfter 1 sowohl an der Lehne 31 als auch am Sitzteil 32 des Sitzes 30 zu befestigen. Dabei belüftet vorzugsweise der an der Lehne 31 befestigte Lüfter 1 die Lehne 31 und der an dem Sitzteil 32 befestigte Lüfter 1 belüftet das Sitzteil 32. Bei der Anordnung des Lüfters 1 an der Seite des Sitzes 30 wird die von der Klimaanlage des Fahrzeugs bereitgestellte kühle Luft aus den in Figur 13 lediglich mit Pfeilen versehenen Luftdüsen zu der Luftversorgungsöffnung 2, 4 des Sitzes 30 und von dort an die Nutzfläche 71, insbesondere an die Sitzoberfläche, transportiert.

Diese Kühlung der Sitzoberfläche ermöglicht einen Wärmestrom vom Insassen weg in den Sitz hinein. Durch die Anordnung des Lüfters 1 bzw. des Lüftermoduls 10, 11 seitlich am Sitz 30 auf der Innenseite des Fahrgastraums des Fahrzeugs kann die kühle und entfeuchtete Luft aus der Klimaanlage, welche die Temperatur im Fahrzeuginnenraum verringert, in besonders einfacher und direkter Weise in den Sitz und somit dem Benutzer zugeführt werden. Demgegenüber wäre die Bereitstellung der kalten Luft für die Sitzkühlung bei einer Anordnung des Lüfters 1 unter dem Sitz 30 bzw. in einem gekapselten Bereich der Lehne 31 erst später möglich. Durch die sich daraus ergebende enge Verknüpfung zwischen der Fahrzeuginnentemperatur und der Fahrzeugsitztemperatur lässt sich die Klimaleistung des Sitzes 30 über die Fahrzeuginnentemperatur in besonders einfacher Weise steuern. Wie oben beschrieben kann damit die Lüfterleistung bzw. die Lüfterdrehzahl des Sitzes 30 über die im Fahrzeug in der Regel vorhandene Klimaanlage in einfacher Weise geregelt werden, so dass ein Benutzer des Fahrzeugs im komfortablen Temperaturbereich sitzt und gesundheitsbeeinträchtigende Unterkühlungen nicht möglich sind.

Der Temperatursensor 411 und der Sonnenlichtsensor 416 messen ständig die in einem Fahrzeug vorhandene thermische Belastung und gleichen diese mit der gewünschten Fahrzeuginnenraumtemperatur ab. Ist der Ist-Wert der Fahrzeuginnentemperatur größer als der Soll-Wert wird die Leistung der Klimaanlage erhöht, d.h. es wird mehr bzw. kältere Luft ins Fahrzeuginnere transportiert.

Bei einem parkenden Fahrzeug kommt es besonders durch eine starke Sonneneinstrahlung zu einer Aufheizung des Fahrzeuginnenraums, d.h. einer Erhöhung der Fahrzeuginnenraumtemperatur, und besonders zu einer Aufheizung der Sitzoberflächen. Bei dieser Aufheizung bildet sich eine Temperaturschichtung im Fahrzeuginnenraum aus, wobei es im Dachhimmelbereich wärmer ist als im Bodenbereich des Fahrzeugs. Besonders die Temperatur der Sitzoberfläche - und in verstärktem Maße bei insbesondere schwarzem Lederbezug der Sitzoberfläche - wird bei Einwirkung von Sonneneinstrahlung, insbesondere direkter Sonneneinstrahlung, sehr hoch. Auch bei einem parkenden Fahrzeug soll nun diese Sitzoberflächentemperatur reduziert werden. Bei einer Überschreitung gewisser Grenzwerte für die durch den Temperatursensor 411 gemessenen Innenraumtemperatur bzw. bei Messung einer hohen Sonneneinstrahlung durch den Sonnenlichtsensor 416 ist es vorgesehen, dass der Lüfter 1 des Klimasitzes anläuft. Durch die im Vergleich zur hohen Sitzoberflächentemperatur geringen Lufttemperatur im Bereich des Lüfters, wird der heißen Sitzoberfläche Wärme entzogen und die Sitzoberflächentemperatur sinkt. Dieser Kühleffekt ist besonders wirksam, wenn auch beim parkenden Fahrzeug in solchen Situationen die Klimanlage oder ein anderes Kühlaggregat aktiviert wird und dadurch gekühlte Luft im Innenraum des Fahrzeugs zur Verfügung gestellt wird.

### Bezugszeichenliste

- 1: Lüfter
- 2, 4: Luftversorgungsöffnung
- 3: Lehnenstruktur
- 5: Luftkanal
- 5a: Druckbegrenzungsabschnitt
- 6: Sitzheizung
- 7: Oberware
- 8: Luftverteilschicht
- 9: Verbindungselement
- 10, 11: Lüftermodul
- 12: Verschließende Stellen
- 13: Kompensationselemente
- 14: Benutzer
- 15: Polsterung
- 30: Fahrzeugsitz
- 31: Lehne
- 32: Sitzteil
- 40: Bedieneinheit
- 41: Anzeige
- 42: Einstellmöglichkeit für die Temperatur des Sitzes
- 51: Schaumstoffmaterial
- 52: Strömungsrichtung der Luft
- 53, 54: Querschnittsflächen
- 71: Nutzfläche
- 72: nicht als Sitzfläche benutzter Bereich
- 100: Verteilungsabschnift
- 400: Zeitachse
- 401: zeitlicher Startpunkt
- 402: Abkühlphase
- 410: Temperatur
- 411: Temperatursensor
- 412: Innenraumtemperaturkurve
- 413: Sitztemperaturkurve
- 414: Innenraumkomforttemperatur
- 415: Sitzkomforttemperatur
- 416: Sonnenlichtsensor
- 420: Lüfterdrehzahl
- 422: erste Lüfterdrehzahl
- 423: zweite Lüfterdrehzahl
- 424: um die zweite Lüfterdrehzahl vorgesehener Bereich
- 430: Wärmestrom

## Patentansprüche

1. Fahrzeugsitz (30) mit wenigstens einem Ventilator (1), wenigstens einer Nutzfläche (71) und wenigstens einer Luftversorgungsöffnung (2, 4), wobei der Fahrzeugsitz (30) eine Lehne (31) mit einer Lehnenstruktur (3) und/oder einer Lehnenpolsterung aufweist, **dadurch gekennzeichnet, dass** der Ventilator (1) vorgesehen ist, in einem zwischen der Nutzfläche (71) und der Luftversorgungsöffnung (2, 4) befindlichen und sich in wenigstens zwei Luftkanalarme teilenden Luftkanal (5) eine gerichtete Luftströmung herzustellen, wobei der Ventilator (1) bei in Fahrtrichtung des Fahrzeugs ausgerichtetem Fahrzeugsitz (30) seitlich an der Lehnenstruktur (3) und/oder seitlich an der Lehnenpolsterung angeordnet vorgesehen ist.

2. Fahrzeugsitz (30) mit wenigstens einem Ventilator (1), wenigstens einer Nutzfläche (71) und wenigstens einer Luftversorgungsöffnung (2, 4), **dadurch gekennzeichnet, dass** der Ventilator (1) vorgesehen ist, in einem zwischen der Nutzfläche (71) und der Luftversorgungsöffnung (2, 4) befindlichen und sich in wenigstens zwei Luftkanalarme teilenden Luftkanal (5) eine gerichtete Luftströmung herzustellen, wobei die Luftströmung in den Luftkanal (5) des Fahrzeugsitzes (30) hinein annähernd parallel zur Nutzfläche (71) ausgerichtet ist.

3. Fahrzeugsitz (30) nach Anspruch 2, **dadurch gekennzeichnet, dass** der Fahrzeugsitz (30) eine Lehne (31) mit einer Lehnenstruktur (3) und/oder einer Lehnenpolsterung aufweist, wobei der Ventilator (1) seitlich an der Lehnenstruktur und/oder seitlich an der Lehnenpolsterung angeordnet vorgesehen ist.

4. Fahrzeugsitz (30) nach Anspruch 2 oder 3, **dadurch gekennzeichnet, dass** der Fahrzeugsitz (30) ein Sitzteil (32) mit einer Sitzteilstruktur und/oder einer Sitzteilpolsterung aufweist, wobei der Ventilator (1) seitlich an der Sitzteilstruktur und/oder seitlich an der Sitzteilpolsterung angeordnet vorgesehen ist.

5. Fahrzeugsitz (30) nach einem der vorhergehenden Ansprüche, **dadurch gekennzeichnet, dass** die Richtung der Luftströmung entweder von der Luftversorgungsöffnung (2, 4) hin zur Nutzfläche (71) oder von der Nutzfläche (71) hin zur Luftversorgungsöffnung (2, 4) vorgesehen ist.

6. Fahrzeugsitz (30) mit wenigstens einer Nutzfläche (71) und wenigstens einer Luftversorgungsöffnung (2, 4), wobei die Nutzfläche (71) mit der Luftversorgungsöffnung (2, 4) über wenigstens einen Luftkanal (5) verbunden ist, wobei in dem Luftkanal (5) eine gerichtete Luftströmung vorgesehen ist, **dadurch gekennzeichnet, dass** in einer Richtung ausgehend von der Luftversorgungsöffnung (2, 4) hin zur Nutzfläche (71) eine Verkleinerung des Querschnitts des Luftkanals (5) vorgesehen ist.

7. Fahrzeugsitz (30) nach Anspruch 6, **dadurch gekennzeichnet, dass** der Luftkanal (5) in der Richtung ausgehend von der Luftversorgungsöffnung (2, 4) hin zur Nutzfläche (71) derart verästelt vorgesehen ist, dass der Luftkanal (5) über die gesamte Nutzfläche (71) verteilt vorgesehen ist.

8. Fahrzeugsitz (30) nach einem der Ansprüche 6 oder 7, **dadurch gekennzeichnet, dass** zumindest in einem Teilbereich des Luftkanals (5) der Querschnitt im Wesentlichen rechteckig vorgesehen ist und eine konstante Breite aufweist und dass die Verkleinerung des Querschnitts des Luftkanals (5) mittels einer Verkleinerung der Höhe des Luftkanals (5) in dem Teilbereich vorgesehen ist.

9. Fahrzeugsitz (30) nach einem der Ansprüche 6, 7 oder 8, **dadurch gekennzeichnet, dass** in der Richtung ausgehend von der Luftversorgungsöffnung (2, 4) hin zur Nutzfläche (71) zumindest in einem Teilbereich des Luftkanals (5) der Gegendruck im Luftkanal (5) kontinuierlich vergrößert vorgesehen ist.

10. Fahrzeugsitz (30) nach einem der Ansprüche 6, 7, 8 oder 9, **dadurch gekennzeichnet, dass** auf der der Nutzfläche (71) gegenüberliegenden Seite des Luftkanals (5) Kompensationselemente (13) derart vorgesehen sind, dass einer Verringerung des Querschnitts des Luftkanals (5) bei Belastung der Nutzfläche (71) entgegengewirkt wird.

11. Fahrzeugsitz (30) nach einem der vorhergehenden Ansprüche, **dadurch gekennzeichnet, dass** die Luftströmung zur Abkühlung der Nutzfläche (71) vorgesehen ist.

12. Fahrzeugsitz (30) nach einem der vorhergehenden Ansprüche, **dadurch gekennzeichnet, dass** die Stärke der Wärmetransportleistung (430) der Luftströmung in Abhängigkeit davon vorgesehen ist, ob eine gemessene Fahrzeugisttemperatur im Fahrzeuginneren oberhalb einer vorgegebenen Fahrzeugsolltemperatur liegt.

13. Fahrzeugsitz (30) nach Anspruch 12, **dadurch gekennzeichnet, dass** die Stärke der Luftströmung (420) als Maß für die Stärke der Wärmetransportleistung (430) der Luftströmung vorgesehen ist.

14. Verfahren zur Steuerung der Stärke der Wärmetransportleistung (430) einer Luftströmung in einem Luftkanal (5) eines Fahrzeugsitzes (30), der in einem Fahrzeug eingesetzt wird, **dadurch gekennzeichnet, dass** die Wärmetransportleistung (430) der Luftströmung in Abhängigkeit davon vorgesehen ist, ob eine gemessene Fahrzeugisttemperatur im Inneren des Fahrzeugs oberhalb einer vorgegebenen Fahrzeugsolltemperatur liegt.

15. Verfahren nach Anspruch 14, **dadurch gekennzeichnet, dass** die Stärke der Luftströmung als Maß für die Stärke der Wärmetransportleistung (430) der Luftströmung verwendet wird.

16. Verfahren nach Anspruch 14 oder 15, **dadurch gekennzeichnet, dass** eine erste Stärke der Luftströmung (422) und eine zweite Stärke der Luftströmung (423) vorgesehen ist, wobei die erste Stärke der Luftströmung (422) größer als die zweite Stärke der Luftströmung (423) vorgesehen ist, wobei für den Fall einer geringfügigen Überschreitung der Fahrzeugsolltemperatur durch die Fahrzeugisttemperatur oder für den Fall der Abwesenheit einer solchen Überschreitung die zweite Stärke der Luftströmung (423) eingestellt wird und wobei die erste Stärke der Luftströmung (422) lediglich für den Fall einer deutlichen Überschreitung der Fahrzeugsolltemperatur durch die Fahrzeugisttemperatur eingestellt wird.
